(19) Europäisches Patentamt
European Patent Office
Office européen des brevets

(11) **EP 2 763 051 B1**

(12) **EUROPEAN PATENT SPECIFICATION**

(45) Date of publication and mention
of the grant of the patent:
**14.08.2019 Bulletin 2019/33**

(51) Int Cl.:
*G06F 16/93* *(2019.01)*      *G06F 16/172* *(2019.01)*
*G06F 16/951* *(2019.01)*      *G06F 16/2455* *(2019.01)*
*G06F 17/21* *(2006.01)*

(21) Application number: **13153546.0**

(22) Date of filing: **31.01.2013**

(54) **Serving font glyphs**

Bereitstellung von Schriftglyphen

Mise à disposition de glyphes de caractères

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.08.2014 Bulletin 2014/32**

(73) Proprietor: **Google LLC
Mountain View, CA 94043 (US)**

(72) Inventors:
• **Hernandez, Nestor Felipe
San Francisco, California 94114 (US)**
• **Cai, Shaoting
San Francisco, California 94121 (US)**

(74) Representative: **Grant, David Michael
Marks & Clerk LLP
15 Fetter Lane
London EC4A 1BW (GB)**

(56) References cited:
**EP-A1- 2 312 458      WO-A2-2010/104906
US-A1- 2011 271 180**

**Description**

**TECHNICAL FIELD**

This document relates to information processing.

**BACKGROUND**

Computer systems are used to distribute various kinds of content. One example of content is advertising, where advertisements can be presented on a computer screen, on a television screen or on a billboard, to name just a few examples. Content such as an advertisement can be created for display to all members of a general intended audience, or the content presentation can be determined on a user-by-user basis, for example.

Text included in content can be generated using one or more fonts. A font can include characters that make up a complete typeface, of which common examples are Times, Courier and Helvetica. Content in languages other than English can use non-Latin scripts for rendering a message. Fonts are sometimes packaged together with a particular electronic document, such as an advertisement. When collected in a file, some non-Latin scripts can occupy a significant amount of storage space, such as of the order of 20MB.

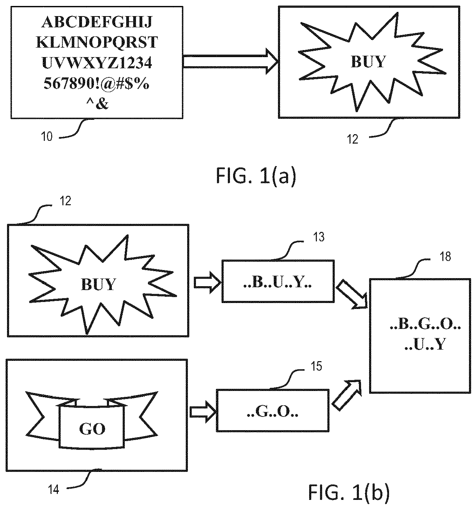

When serving advertisements or other documents including text, serving speed is important. The process of compiling the entire glyph set for a font is a slow process. Referring to FIG. 1, for example, it will be understood that compiling the entire font glyph set 10 for a font is highly inefficient if the requested advertisement 12 comprises just a few symbols or characters. Compiling a subset of the glyph set 10 comprising just the required symbols will be more efficient in terms of file size but cannot be re-used for subsequent requests if one or more different symbols are required. Created subsets can be cached to avoid re-compiling, but given the number of possible combinations required for different documents, this is impractical. The European application EP2 312 458 discloses an apparatus and a method for creation and distribution of reduced glyph font files in view of avoiding inefficient font glyph set compilation.

**SUMMARY**

The invention is defined by the appended claims.

The details of one or more implementations are set forth in the accompanying drawings and the description below. Other features and advantages will be apparent from the description and drawings, and from the claims.

**DESCRIPTION OF DRAWINGS**

FIG. 1(a) is a schematic diagram of a prior art method for serving a complete glyph set for a font;

FIG. 1(b) is a schematic diagram of a method for serving a superset of required glyphs in accordance with the invention;

FIG.2 shows in overview a system for serving a superset of required glyphs in accordance with the invention;

FIG.3 shows a flowchart of a first example method for serving a superset that may be used in the FIG.2 system;

FIG.4 shows a flowchart of a second example method for serving a superset that may be used in the FIG.2 system;

FIG.5 shows a flowchart of a third example method for serving a superset that may be used in the FIG.2 system;

FIG.6 shows a flowchart of a fourth example method for serving a superset that may be used in the FIG.2 system;

FIG.7 shows an example graphical user interface that can be used for creating an electronic document.

FIG. 8 shows a further example system that can serve part or all of a font.

FIG. 9 shows a yet further example system that includes a font server.

FIG. 10 shows a table with example compile times and file sizes.

FIG. 11 shows a flowchart of an example method for obtaining a font for a document; and

FIG. 12 is a block diagram of a computing system that can be used in connection with computer-implemented methods described in this document.

Like reference symbols in the various drawings indicate like elements.

**DETAILED DESCRIPTION**

FIG. 1(b) illustrates in overview the process of identifying a superset of glyphs covering one or more requested symbols in a given font. Given that the two example ads 12, 14 share the same typeface, they can use the same font library which in this case is TimesNewRoman.

In response to a client request for either or both of the ads 12, 14 the entire glyph set for the font could be compiled and served (as was the case for FIG. 1) but this will be a relatively slow process due to the resulting large font file. In order to reduce the font file size and therefore increase the serving speed, a subset of glyphs 13, 15 comprising only those required by the particular ads 12, 14 could be compiled and served. One might also cache and re-use such subsets 13, 15. However, given the large number of possible combinations, it is more useful to identify and cache supersets which cover a larger number of glyphs of the particular font (but not all) and which can therefore potentially cover more than one ad or document.

In the example shown, a superset 18 is shown which when compiled can be cached at a font server and sent to a client as a single file when required; it is capable of rendering both ads 12, 14 using a relatively small file size and any other ads having the five glyph symbols contained therein.

Embodiments described herein not only concern the identification and serving of cached supersets but also the generation of new supersets in accordance with rules. These rules take into account the relative 'cost' in searching for supersets compared with compiling a new superset. A number of options for these rules are presented which can be used as alternates or together in combination. There is also described a method and system for cache management. Such embodiments take into account the desire to balance factors such as cache capacity, compilation cost, look-up speed and network latency.

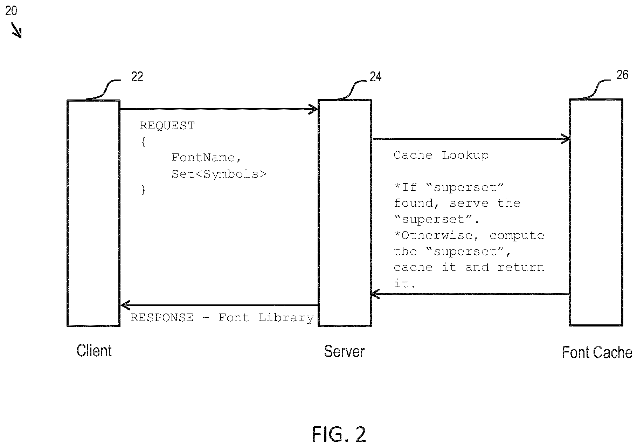

FIG.2 shows a first embodiment system 20 for serving fonts in response to a client request. A request is first sent from a client 22 to a font server 24. The request might be, for example, a request for an ad, which includes identification of a font and a set of symbols used in the ad. In response, the font server 24 searches a font cache 26 associated with the server for a superset of glyphs in the relevant font that covers the identified symbols. More than one superset might be identified. If a superset is found in the font cache 26, it is retrieved by the font server 24 and sent as a font library file to the client 22. If no suitable superset is found, then a new one is compiled covering the identified symbols and the file is stored in the cache and sent to the client 22.

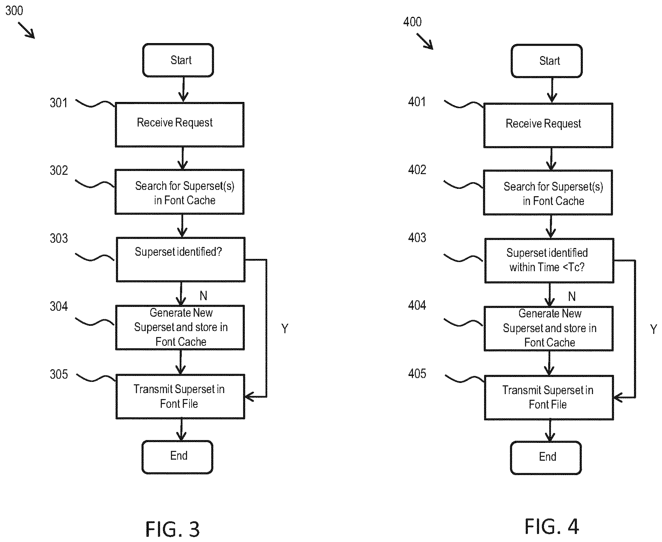

FIG.3 is a flow diagram 300 which gives the method steps involved in the first embodiment. The steps might be those provided by a computer program running on a processor or microcontroller of the server 24. In a first step 301 the server 24 receives the request for a font and a number of symbols. In a second step 302 the server 24 searches for a suitable superset in the font cache 26. In a third step 303 if the server 24 identifies a suitable superset, it is transmitted in a font file to the client 22 in step 305. If no suitable superset is identified, in a further step 304 a new superset is compiled and this is stored in the font cache 26. The new superset is also transmitted in a font file to the client 22 in step 305. The caching and transmitting steps can be performed in any order or simultaneously.

As indicated above, there are a number of considerations when deciding whether it is appropriate to search for and/or use a cached superset or compile a new one. For example, it is usually desirable to locate a cached superset quickly; a relatively long delay in finding a suitable superset may make it preferable to generate a new superset. A further example is font file size; a large superset may well cover the required symbols but the resulting file size may be large and/or introduce network latency that might not be that case with a newly-generated, smaller, superset.

For this purpose, further embodiments of the font server 24 in FIG. 2 are configured to optimise or at least improve operation in this regard. The reference numerals used in FIG. 2 will be used for ease of explanation.

A second embodiment font server 24 takes into account the time taken to locate a suitable superset in the font cache 26. A timer or counter is provided in the server 24 which allocates a predetermined time limit or number of search iterations for locating at least one superset in the font cache 26 covering the identified symbols. If no such superset is found, then a new superset is compiled and stored in the font cache 26 and sent in a font file to the client 22.

FIG.4 is a flow diagram 400 which gives the method steps involved in the second embodiment system. The steps might be those provided by a computer program running on a processor or microcontroller of the server 24. In a first step 401 the server 24 receives the request for a font and a number of symbols. In a second step 402 the server 24 searches for a superset in the font cache 26. In a third step 403 if the server 24 identifies a suitable superset within a predetermined time frame or number of search iterations $T_c$, it is transmitted in a font file to the client 22 in step 405. If no suitable superset is identified within $T_c$, in a further step 404 a new superset is compiled and this is stored in the font cache 26. The new superset is then transmitted in a font file to the client 22 in step 405.

A third embodiment font server 24 takes into account the situation where more than one suitable superset is identified. Although not essential, this embodiment may also include the second embodiment step of allocating a time limit or restricted number of search iterations $T_c$. If plural suitable supersets are identified in the font cache 26 then a respective cost is generated and associated with each such superset. The cost should generally reflect the transmission or bandwidth burden of sending that superset back to the client 22. In this case, the cost for each superset is dependent on the symbol/character count; the larger the number of symbols the higher the cost. Therefore, the rule or cost factor employed by the font server 24 is to transmit the superset with the least number of symbols. If no superset is found, then a new superset is compiled and stored in the font cache 26 and sent in a font file to the client 22.

In pseudo-code, this can be represented as:

```
var Map<String, Number> cachedCharactersForFontFace;
void addFontToCache(Font font) {
cachedCharactersForFontFace[font.name] += font.characters;
}
void removeFontFromCache(Font font) {
cachedCharactersForFontFace[font.name] -= font.characters;
}
Number getSupersetLookupCost(String characters, String fontName) {
Number cost = cachedCharactersForFontFace[fontName] * characters.length();
return cost;
}
```

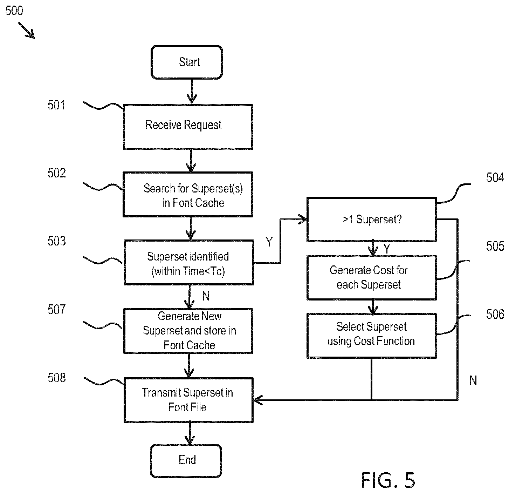

FIG.5 is a flow diagram 500 which gives the method steps involved in the third embodiment system. The steps might be those provided by a computer program running on a processor or microcontroller of the server 24. In a first step 501 the server 24 receives the request for a font and a number of symbols. In a second step 502 the server 24 searches for a superset in the font cache 26. In a third step 403 the server 24 identifies whether one or more suitable superset(s) are located within a predetermined time frame or number of search iterations $T_c$; in this case therefore the method also uses the second embodiment rule but this is not essential. If suitable superset(s) are located, then a subsequent step 504 determines whether there are plural supersets. If not, then the single superset is transmitted in step 508. If plural supersets are identified, then in step 505 a cost is associated with each superset, e.g. based on symbol count, and in step 506 a single superset is selected based on a cost function, in this case by selecting that with the fewest number of symbols. The selected superset is transmitted to the client 22 in step 508. Returning back to step 503, if no suitable superset is identified within $T_c$, in a further step 507 a new superset is compiled and this is stored in the font cache 26. The new superset is then transmitted in a font file to the client 22 in step 508.

A fourth embodiment font server 24 takes into account the situation where it is more appropriate to generate a new superset notwithstanding that a cached superset is identified. This determination can use one or both of the determinations used in the second and third embodiments. In this case, we assume that both are included.

In overview, in response to receiving a font request, the font server 24 is configured to calculate a font compilation cost, e.g. using:

$$FontCompilationCost = GlyphCount * FontComplexity + CompilerOverhead$$

The GlyphCount is the number of symbols requested by the client 22 to be included in the font asset. The FontComplexity is the cost of compiling one glyph for the selected font. This can be determined by a prior training program on all supported font resources to compute an average cost-per-glyph for each font the results of which are stored in a database. The CompulerOverhead is a constant value representing the cost of launching a font compiler session.

In pseudo-code, this can be represented as.

```
const Number COMPILER_OVERHEAD;
Number getFontRecompilationCost(String characters, String fontName) {
Number glyphCount = characters.length();
Number fontComplexity = FontComplexityDatabase.getComplexity(fontName);
return glyphCount * fontComplexity + COMPILER_OVERHEAD;
}
void trainFontComplexityDatabase() {
for each (font in SUPPORTED_FONTS) {
 Number cost = time(compileFont(font, "a"));
 FontComplexityDatabase.putComplexity(font.name, cost); }}
```

Thereafter, if one or more suitable supersets are identified in the font cache 26 then a cost is generated and associated with the or each superset for comparison with the FontCompilationCost. Finally, a rule determines based on the different costs whether to select an identified superset from the cache 26 or to compile a new superset for caching and transmission back to the client 22.

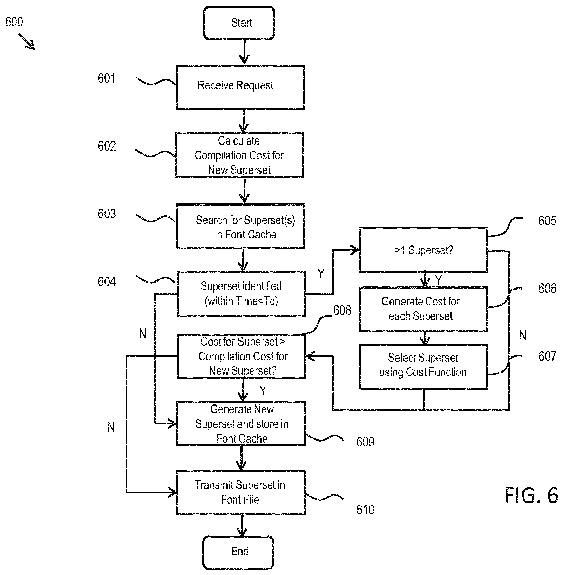

FIG.6 is a flow diagram 600 which gives the method steps involved in the fourth embodiment system. The steps might be those provided by a computer program running on a processor or microcontroller of the server 24. In a first step 601 the server 24 receives the request for a font and a number of symbols. In a second step 602, the server 24 calculates the FontCompilationCost using, e.g. the algorithm described above. In step 603, the server 24 searches for a superset in the font cache 26. In step 604 the server 24 identifies whether one or more suitable superset(s) are located within a predetermined time frame or number of search iterations $T_c$; in this case therefore the method also uses the second embodiment rule but this is not essential. If suitable superset(s) are located, then a subsequent step 605 determines whether there are plural supersets. If not, then the single superset is used in step 608 to be described below. If plural supersets are identified, then in step 606 a cost is associated with each superset, e.g. based on symbol count, and in step 607 a single superset is selected based on a cost function, in this case by selecting that with the fewest number of symbols. In step 608, it is determined whether the FontCompilationCost or the cost associated with the selected superset is preferred; if the cost values are normalised, then it is a matter of selecting the one having the lowest cost, so another way of describing this step is determining whether FontCompilationCost is less than the cost for the selected superset. If so, then in step 609 a new superset is compiled and stored in the font cache 26 and then tramsmitted in step 610. Otherwise, the selected superset is transmitted in step 610.

In the above, note that step 602 can be performed at any time prior to step 608.

The font server 24 is also configured to manage the font cache 26 to cater for the situation where the cache becomes or approaches full capacity. In the event that a predetermined condition is reached, e.g. the cache is full, the font server 24 is operable to delete or remove one or more entries based on a rule, for example the least recently used (LRU) rule. Each cache entry has an associated timestamp when added to the cache 26 and the entry with the oldest timestamp is that which is removed.

As an alternative, removal may be determined by a time-to-compile cost associated with each superset stored on the font cache 26. The longer the time taken to compile a superset, the more computationally expensive it is and hence such a management rule will keep such supersets cached for longer. In operation, as new supersets are added to the font cache 26, a time-to-compile cost is computed, e.g. using the above FontCompilationCost metric, and stored as metadata. The superset having the least time-to-compile cost is thereafter removed first from the font cache 26 if it is full.

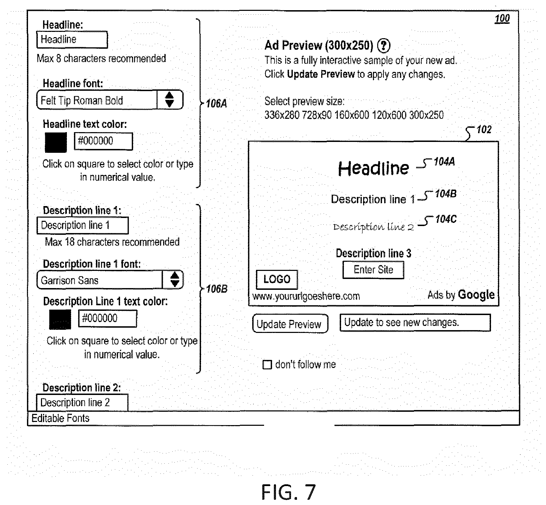

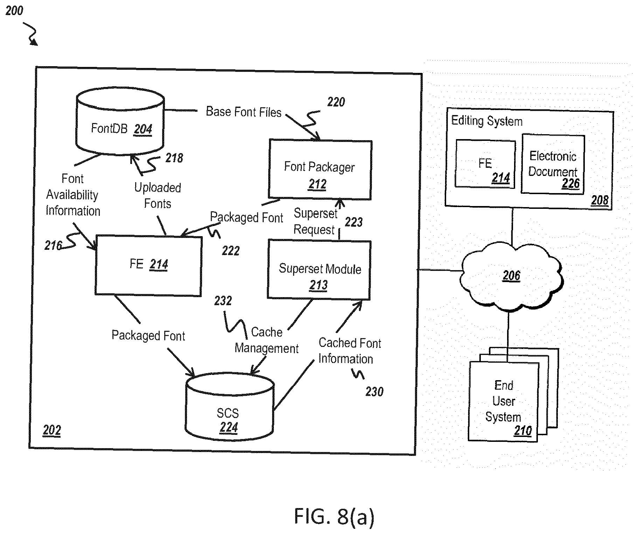

Further details of a practical system which can incorporate at least one of the above embodiments will now be described with reference to Figures 7 to 13. The system 200 is shown in overview in FIG. 8(a) and includes a computing system 202 in communication with a first terminal 208 on which advertisements (ads) can be created and/or edited, and a second terminal 210 which is used to search for, and present, ads. Further details will be described below.

FIG. 7 shows an example graphical user interface 100 that can be used for creating an electronic document. In some implementations, a document creator such as an advertisement designer uses the interface 100 to create a document (e.g., an ad) for review by and/or display to one or more other people (e.g., an ad editor or an ad recipient). For example, the interface 100 can allow the creator to use one or more fonts (such as an existing font or a custom font defined by the creator) in the document; the system or application receiving the created document can retrieve, from a designated font server, as much of the font as necessary for displaying the document.

The interface 100 can include a preview area 102. The preview area 102 can include one or more content portions such as images, graphics, text, links or any other content that the creator chooses to include in the document. Here, the preview area 102 currently includes text portions 104A-C, among others. The interface 100 can include one or more areas 106 dedicated to formatting content for the document. In some implementations, formatting can be applied on a portion-by-portion basis for the included content. For example, the area 106A can be used to choose one or more formatting aspects for the portion 104A, and the area 106B similarly for the portion 104B, and so on.

In some implementations, the creator can enter a text content of the portion, choose a font for the portion, and/or select a color for the portion using the area 106. For example, the text portion 104A here includes the content "Headline" written using the font Felt Tip Roman Bold in the color identified as "#000000".

As such, the created document, such as an ad, will contain content portions that may require use of one or more fonts for display. That is, when the document is forwarded to another user, such as to an editor or final recipient, the receiving system will use part or all of the font(s). The required font can be embedded in the electronic document or otherwise stored in the receiving system. If so, the receiving system can retrieve the font from that location and display the document. As another example, the font may be available from a dynamic font server and the receiving system can request the font from the font server for use with the particular document. In accordance with the present invention, subsets of glyphs derived from within the entire font glyph set are requested and/or transferred although such subsets are actually termed supersets by virtue of them including further glyphs in addition to those specified in the request. For example, if the receiving system only needs, say, about 10% of the glyphs of the font, the system can indicate this in the request and the font server can package and return a superset that covers the requested glyphs.

As mentioned above, FIG. 8(a) shows an example system 200 that can serve part or all of a font. The system 200 includes a computer system 202 that can include predefined and/or custom fonts in a font database 204. The computer system 202 can include any kind of computer device including, but not limited to, a server device. The font database 204 includes information that defines at least one font comprising multiple glyphs, such as any or all glyphs of the font TimesNewRoman or Felt Tip Roman Bold mentioned in the above examples. The computer system 202 can be connected to any kind of network 206, such as to a local network and/or to the internet. Through the network 206, the computer system 202 can communicate with one or more other systems, such as with an editing system 208 and/or with an end user system 210. For example, the computer system 202 can serve one or more glyphs for use by the system 208 and/or 210 in presenting an electronic document such as an ad.

In some implementations, the font database 204 can contain any or all of the following font information items: a font identifier, a font name, a font language, a font script, font available Unicode characters, an image preview of the font, a user identifier (e.g., for a custom defined font), base font file bytes, and/or base font file hash. In some implementations, a font name can be localized, such as by having one font name for English, another font name for Chinese, and so on. A local font name can be used in presenting available fonts to users in different locales. Upon a font being uploaded to the font database 204 (such as a custom font), basic registration for the font can be performed (in some implementations including language and/or script determination). The font database 204 can interface with one or more components, for example to provide functionality for the following use cases. A document creator can be shown a list of relevant fonts while editing. For example, language information for each font can be used, such as to allow user selection. For example, information about available glyphs for each font can be used, such as for user feedback when a specified character cannot be rendered. For example, information about font ownership can be maintained, such as for showing a particular account's custom fonts. A custom font can be uploaded. For example, the owner of the custom font can be registered. For example, information about the font can be registered, such as available characters. For example, a unique font identifier can be generated. For example, a quota per account can be established and tracked. Access to original font file bytes can be granted, such as for copying to local file caches.

The computer system 202 includes a font packager 212. The font packager 212 includes the necessary infrastructure for dividing any font into a subset ("glyph set") containing the glyphs needed for a particular document and compiling the glyph(s) into a font file, such as a .swf file. In some implementations, the font packager 212 can receive a request from a device such as the system 208 and/or 210. The font packager 212 can also receive a request from a superset module 213 as will be explained below. In both cases, the request can be generated because the system 202 needs a certain font to display or otherwise present an electronic document. For example, the request can identify the glyph(s) of a particular font that the system 208 and/or 210 needs. In response to the request, the system 202 can forward information obtained from the font database 204. In some implementations, such information can define a superset which includes the multiple glyphs identified in the request and not a remainder of the multiple glyphs for the font. Fonts and/or glyphs can be defined using any suitable structure of information. For example, the font can be identified by a font identifier in the electronic document and one or more glyphs can be specified using a codepoint in the electronic document.

In some implementations, the font packager 212 can create the requested package using a labelled font superset that includes a font identifier for the font in the font database 204 and an accompanying base file, a label including a font name by which the superset can be referred, and a set of codepoints (e.g., a Unicode set) to be packaged.

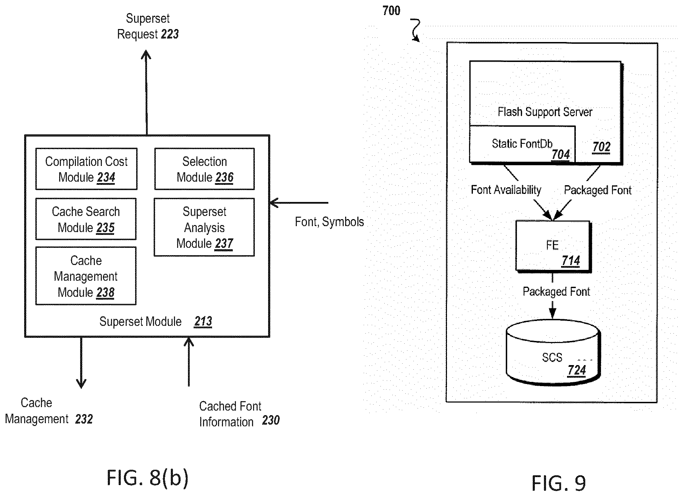

Referring to FIG. 8(b), the superset module 213 comprises a compilation cost module 234, a cache search module 235, a selection module 236, a superset analysis module 237 and a cache management module 238. Said modules 234, 235, 236, 237, 238 operate in conjunction with the font packager 212 to implement any of the first to fourth embodiments described above. The superset module 213 receives client requests and in response either outputs a superset request 223 to the font packager 212 in order to obtain a compiled superset of glyphs covering those in the request, or it selects a cached superset from a static content server (SCS) 224 or some other cache memory.

The decision as to whether to use a cached superset or compile a new one is made by the selection module 236 which comprises predetermined rules as outlined previously. The compilation cost module 234 is configured to calculate the cost of compiling a superset using the algorithm described previously. The cache search module 235 is configured to look at supersets already cached on the SCS 224, or other cache memory, and can include a counter restricting the time or number of search iterations in identifying suitable supersets. The superset analysis module 237 is configured to assign a cost measure to each identified superset. The cache management module 238 is configured to identify when the cache is full, or approaching full, and performs the appropriate removal and replacement of supersets in accordance with rules described previously.

Returning to FIG. 4(a) if the superset module 202 determines that compilation of a new superset is necessary, a superset request 223 is provided to the font packager 212. The font packager 212 in response is configured to package (compile) in a new font file the required glyphs for the identified font. The resulting font file is transmitted to the system 208 and/or 210 which therefore is/are provided with the glyphs needed to generate and display a document containing the required symbols. The new font file is also cached on the SCS 224 or other cache.

The superset module 213 is in this case part of the server 202. It can however be a separate or external system associated with the server 202 which provides the superset request 223 to the font packager 212 over a network.

The document creator can use a frontend application 214 in one or more aspects of managing the electronic document. In some implementations, the frontend application 214 can generate the interface 100 (FIG. 3) and/or can be used for creating a document such as an ad.

The font database 204 can provide font availability information 216 to the frontend application 216, for example such that one or more available fonts can be identified in the area(s) 106 (FIG. 7). The frontend application 214 can provide one or more uploaded fonts 218 to the font database 204, for example a custom font that the document creator provides to the database. A custom font can be defined in any suitable way, such as by creating definitions for vector graphics such that font glyphs can be generated in more than one font size and/or style (e.g., in boldface). For example, a font can be defined using any suitable font format, such as in form of a TrueType font, an OpenType font, or a Type 1 font, to name just a few examples.

The font database 204 can provide one or more base font files 220 to the font packager 212. For example, the font database 204 can provide the glyph(s) sought by another system such as the system 208 and/or 210 and/or the superset module 213. The font packager 212 can generate a packaged font 222 in a font file using the obtained fonts, for example in form of a .swf file or any other suitable format.

The frontend application 214 can take one or more actions with regard to the packaged font 222. For example, the frontend application 214 can forward the packaged font 222 to the system 208 and/or 210 for use in displaying or otherwise presenting an electronic document. As another example, the frontend application 214 can use the packaged font 222 in creating a version of the electronic document (e.g., by replacing codepoints and/or other glyph placeholders in the document with the actual glyph chosen by the creator). Such a created version of an electronic document can be stored in the SCS 224. In some implementations, image(s) of a created document can be stored in the SCS 224 and thereafter provided to one or more viewers. For example, a created advertisement using a particular font can be stored in the server 224 and be served to any or all of the end user systems 210 upon a predefined event, such as that the user enters a particular search query or visits a certain page or site.

As already mentioned, packaged font files can be stored in a cache region of the SCS server 224. This can allow multiple documents to refer to, and use, an already-compiled packaged font file. For example, an advertisement document can exist in different size variations that all include the same text, or some variations can use only a subset of the supported text of another variation. A stored font package, such as a font .swf file, can allow multiple variations to use a common file.

The editing system 208 can be used for editing an electronic document 226. For example, the document 226 may have been created on the system 202 by an ad creator using the frontend application 214. Then, an ad editor can make selected changes in the document 226 using the same application 214 or another application. Accordingly, one user can create the electronic document 226 on one device and another user can modify the electronic document 226 on another device. The other device (e.g., the system 208 and/or 210) can determine what glyph(s) the electronic document 226 requires, for example by reading each codepoint defined in the document. The other device can then generate a request to the system 202 based on such a determination. For example, the request can identify the glyphs needed. In some implementations, the font includes a non-Latin script (such as, but not limited to, those used in the Chinese, Japanese and Korean languages). For example, each of the multiple glyphs requested for the electronic document 226 can be a non-Latin glyph. Thus, the electronic document 226 can be presented using the system 208 and/or 210 such that the document includes the glyph(s) requested and received from the font database 204.

Further editing of the electronic document 226 can be performed. In some implementations, the system 208 and/or 210 can detect whether the editor enters one or more glyphs not already used in the document, and if necessary request and receive any such glyph(s) from the font database 204. The document 226 can be updated when a requested glyph has been received. In some implementations, a determination that the revised document includes at least another glyph not already stored on the local device can be performed upon a predetermined event, such as an explicit refresh command from the user or a period of user inactivity. For example, assume that the editor is working on a revision of the electronic document 226. After the user makes a change in the document and a certain time passes without further input from the user, the system can automatically determine whether the revised document requires any additional glyph(s) not already present. If so, the required glyph(s) can be requested together with other glyphs in the returned superset determined by the superset module 213. This and/or other functionality on the requesting device can be provided by execution of instructions in any form of script, such as by Javascript code.

In some implementations, an exception can be generated upon a condition being met, such as if a requested font does not exist in the font database 204. In contrast, one or more issues may be explicitly ignored. In some implementations, no exception may be generated for an invalid font range. For example, if a request is made for a font subset that includes one or more characters not present in the base font, the character(s) will be omitted/ignored in responding to the request.

The glyph(s) can be requested using an address of the font database 204. For example, each font covered by the font availability information can be identified by a font identifier. The sought glyph(s) can then be requested by contacting the font packager 212 with the identities of the font and the specific glyph(s). In some implementations, the necessary information for where to obtain fonts that are not embedded in the electronic document and not otherwise available to the receiving system can be included in the document 226. For example, the document 226 can include information that identifies the computer system 202 and/or the font package 212 as the resource for requesting a font for a document. In some implementations, the necessary information for obtaining fonts can be included in the applicable program handling the document, such as in a browser and/or in the frontend application 214. For example, the frontend application 214 can be installed both on the device where the document is created (e.g., on the system 202) and on the device where the document is to be edited (e.g., on the system 208). The program 214 can then use its internal identification of the computer system 202 and/or the font package 212 to seek and obtain the necessary font(s).

The end user system 210 can be used for accessing or editing one or more electronic documents. In some implementations, the end user system can include any kind of computer device, such as a personal computer, mobile device or a telephone. For example, an ad using a predefined font (such as a custom font) can be displayed on a device operated by a consumer.

FIG. 9 shows another example system 700 that includes a font server 702. Components that in some implementations can correspond to those of the system 200 shown in FIG. 8(a) are identified using corresponding reference numbers. In some implementations, the server 702 implements the same interface as the superset module 213 and the font packager 212 and acts as a wrapper to block calls to a server. For example, an implementation that uses a standard client-server framework can allow a reduction or minimization of code dependencies in the frontend program 214.

A static font database 704 can be included in the system 700. In some implementations, the database 704 can allow only queries for available fonts. For example, the database 704 can be encapsulated in the server 702, such as to avoid application dependency (e.g., by the application 714) on the font data directly.

For example, a packaged font file can be provided by the server 702 for receipt by the frontend application 214, such as for direct receipt by an end user system or an editor, or for placement in the SCS server 724.

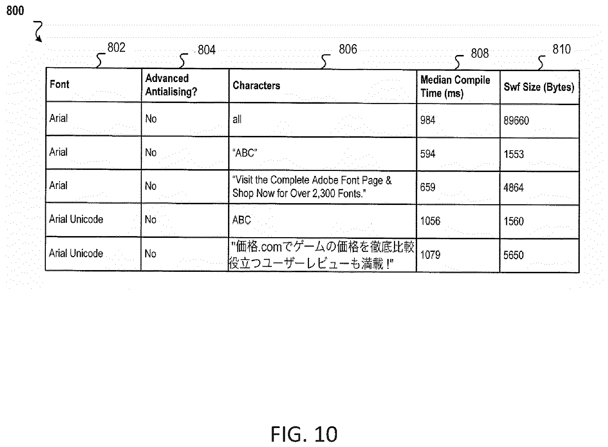

FIG. 10 shows a table 800 with example compile times and file sizes. Here, a font column 802 indicates which font is implicated by a particular character or characters. An antialiasing column 804 indicates whether advanced antialiasing is provided for the font identified in column 802. A character column 806 indicates which characters are defined using the identified font in each example. A compile time column 808 indicates the median compile time in milliseconds. A file size column 810 indicates a size in Bytes of a .swf file generated for the characters identified in the column 806. Here, the advantage in terms of smaller file size for files covering a subset of characters as opposed to the entire set is clear.

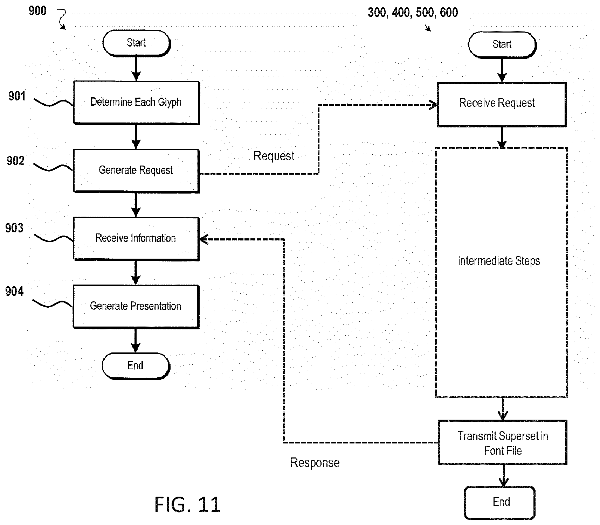

FIG. 11 shows a flowchart of a client - server method 900 for obtaining a font file which comprises a superset of glyphs. At the client side, in a first step 901 each glyph of a font that is specified in contents of an electronic document is determined, for example based on entered symbols in a search portal or editing application. The determination identifies a subset of glyphs included in the font. The subset is determined on a first device that does not have the font stored thereon. For example, the system 208 and/210 can determine the glyph(s) of the electronic document 226 for which the system does not have the corresponding font. In step 902, a request is generated to a second device, in this case a font server, based on the determination. The request identifies the subset to the second device. For example, the system 208 and/or 210 can generate a request to the superset module 213 of the font serving system 202 in Figure 8(a).

At the server side, the method steps follow those shown in any one of the flowcharts 300, 400, 500, 600 in Figures 3 to 6.

Returning to the client side steps, in step 903, information is received at the first device. The information is sent from the second device in response to the request and defines the superset of the multiple glyphs which include those specified in the request of step 902. In step 904, a presentation of the electronic document is generated using the received information.

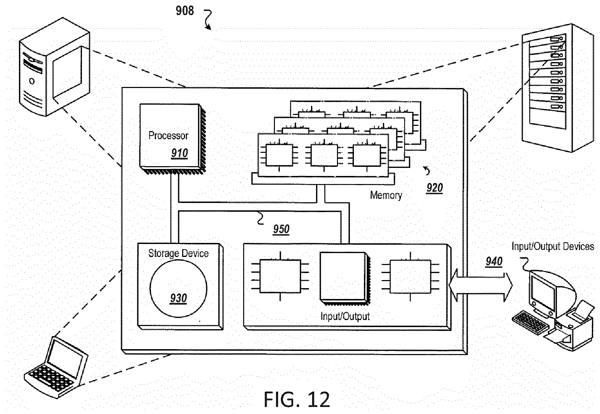

FIG. 12 is a schematic diagram of a generic computer system 908. The system 908 can be used for the operations described in association with any of the computer implement methods described previously, according to one implementation. The system 908 includes a processor 910, a memory 920, a storage device 930, and an input/output device 940. Each of the components 910, 920, 930, and 940 are interconnected using a system bus 950. The processor 910 is capable of processing instructions for execution within the system 908. In one implementation, the processor 910 is a single-threaded processor. In another implementation, the processor 910 is a multi-threaded processor.

The processor 910 is capable of processing instructions stored in the memory 920 or on the storage device 930 to display graphical information for a user interface on the input/output device 940.

The memory 920 stores information within the system 908. In some implementations, the memory 920 is a computer-readable medium. The memory 920 is a volatile memory unit in some implementations and is a non-volatile memory unit in other implementations.

The storage device 930 is capable of providing mass storage for the system 908. In one implementation, the storage device 930 is a computer-readable medium. In various different implementations, the storage device 930 may be a floppy disk device, a hard disk device, an optical disk device, or a tape device.

The input/output device 940 provides input/output operations for the system 908. In one implementation, the input/output device 940 includes a keyboard and/or pointing device. In another implementation, the input/output device 940 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non volatile memory, including by way of example semiconductor memory devices, such as EPROM, EEPROM, and flash memory devices; magnetic disks such as internal hard disks and removable disks; magneto-optical disks; and CD-ROM and DVD-ROM disks.

The processor and the memory can be supplemented by, or incorporated in, ASICs (application-specific integrated circuits). To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of this disclosure. Accordingly, other implementations are within the scope of the following claims.

## Claims

1. A method comprising:

   (i) receiving (301; 401; 501; 601) a request for glyphs, the request identifying a font and characters of the font that are required;
   (ii) searching (302; 401; 502; 603) for at least one superset of glyphs that contains the required glyphs and some other glyphs and is absent of at least some other glyphs of the font;
   (iii) if at least one superset is found, returning (304; 505; 508; 610) the or a selected superset in reply to the request; and
   (iv) if at least one superset is not found, generating (304; 404; 507; 609) a set of glyphs that contain the required glyphs, returning the set in reply to the request, and storing the generated set in a cache.

2. A method as claimed in claim 1, wherein step (ii) is performed for a predetermined time period or predetermined number of search iterations after which step (iv) is performed if no superset is found within the said time period or number of iterations.

3. A method as claimed in claim 1 or claim 2, wherein if plural different supersets are found in step (ii), the method further comprises assigning a respective cost to each superset and selecting one to return in step (iii) based on a predetermined rule.

4. A method as claimed in claim 3, wherein the cost assigned to each superset is dependent on the number of characters present in each superset.

5.  A method as claimed in claim 4, wherein the selected superset in step (iii) is that which has the fewest characters.

6.  A method as claimed in any preceding claim, wherein prior to step (iii) the method further comprises the steps of:

    generating for the or each superset found in step (ii) a respective cost; and
    generating a compilation cost for generating a superset of glyphs that contain the required glyphs,
    wherein step (iii) is performed only if a superset found in step (ii) has a cost that is determined by a predetermined rule to be preferable to the compilation cost, otherwise step (iv) is performed.

7.  A method as claimed in claim 6, wherein the compilation cost is dependent on the number of characters in the received request in (i) and a predetermined cost for generating a single glyph for the identified font.

8.  A method as claimed in claim 7, wherein the compilation cost is further dependent on an overhead constant associated with compiling glyph(s) for the identified font.

9.  A method as claimed in any preceding claim, wherein prior to storing the generated subset in a cache in step (iv), the method further comprising identifying whether the cache is full or has restricted available storage space and if so removing one or more entries using a predetermined management algorithm.

10. A method as claimed in claim 9, wherein the management algorithm removes one or more least recently used entries.

11. A method as claimed in 9, wherein step (iv) further comprises associating with the generated superset a time-to-compile cost for generating said superset and wherein the management algorithm removes one or a predetermined number entries having the least time-to-compile cost.

12. A method as claimed in any preceding claim, further comprising receiving a request for a document containing the glyphs requested in step (i) and returning the document with the requested superset of glyphs.

13. A method as claimed in any preceding claim, wherein returning the superset of glyphs comprises bundling the glyphs in a single file, e.g. a .swf file, and sending the file to the client location.

14. A computer program comprising instructions that when executed by a computer apparatus control it to perform the method of any of claims 1 to 13.

15. Apparatus (908), the apparatus having at least one processor (910) and at least one memory (920) having computer-readable code stored thereon which when executed controls the at least one processor (910) to perform a method as claimed in any of claims 1 to 13.

**Patentansprüche**

1.  Verfahren in einem Server zum Bereitstellen von Schriftarten als Reaktion auf eine Client-Anforderung, wobei das Verfahren umfasst:

    (i) Empfangen (301; 401; 501; 601) einer Anforderung von Glyphen, wobei die Anforderung eine Schriftart und Zeichen der Schriftart, die benötigt werden, identifiziert;
    (ii) Suchen (302; 401; 502; 603) nach mindestens einer Obermenge von Glyphen, wobei eine Obermenge eine Teilmenge aller Glyphen für eine Schriftart ist, die mehr als die genaue Teilmenge von Glyphen in der Anforderung enthält.
    (iii) wenn mindestens eine Obermenge gefunden wird: Zurücksenden (304; 405; 508; 610) der oder einer ausgewählten Obermenge als Antwort auf die Anforderung; und
    (iv) wenn nicht mindestens eine Obermenge gefunden wird: Erzeugen (304; 404; 507; 609) einer Menge von Glyphen, welche die benötigten Glyphen enthält, Zurücksenden der Menge als Antwort auf die Anforderung, und Speichern der erzeugten Menge in einem Schnellzugriffspeicher.

2.  Verfahren nach Anspruch 1, worin Schritt (ii) für einen vorbestimmten Zeitraum oder eine vorbestimmte Anzahl von Suchiterationen durchgeführt wird, wonach Schritt (iv) durchgeführt wird, wenn innerhalb des Zeitraums oder der Anzahl der Iterationen keine Obermenge gefunden wird.

3. Verfahren nach Anspruch 1 oder Anspruch 2, worin, wenn in Schritt (ii) mehrere unterschiedliche Obermengen gefunden werden, das Verfahren ferner umfasst: Zuweisen eines jeweiligen Kostenaufwandes zu jeder Obermenge und auf einer vorbestimmten Regel beruhendes Auswählen von einer, um sie in Schritt (iii) zurückzusenden.

4. Verfahren nach Anspruch 3, worin der jeder Obermenge zugeordnete Kostenaufwand von der in jeder Obermenge vorhandenen Anzahl von Zeichen abhängig ist.

5. Verfahren nach Anspruch 4, worin die ausgewählte Obermenge in Schritt (iii) diejenige ist, welche die wenigsten Zeichen aufweist.

6. Verfahren nach einem der vorhergehenden Ansprüche, worin das Verfahren vor Schritt (iii) ferner die Schritte umfasst:

   Erzeugen eines jeweiligen Kostenaufwandes für die oder jede in Schritt (ii) gefundene Obermenge; und Erzeugen eines Zusammenstellungskostenaufwandes zum Erzeugen einer Obermenge von Glyphen, welche die benötigten Glyphen enthält,
   worin Schritt (iii) nur ausgeführt wird, wenn eine in Schritt (ii) gefundene Obermenge einen Kostenaufwand aufweist, der durch eine vorbestimmte Regel als gegenüber dem Zusammenstellungskostenaufwand zu bevorzugen bestimmt wird, andernfalls wird Schritt (iv) ausgeführt.

7. Verfahren nach Anspruch 6, worin der Zusammenstellungskostenaufwand von der Anzahl der Zeichen in der empfangenen Anforderung in (i) und einem vorbestimmten Kostenaufwand zum Erzeugen einer einzelnen Glyphe für die identifizierte Schriftart abhängig ist.

8. Verfahren nach Anspruch 7, worin der Zusammenstellungskostenaufwand ferner von einer Gemeinkostenkonstante abhängig ist, die mit dem Zusammenstellen von Glyphe(n) für die identifizierte Schriftart assoziiert ist.

9. Verfahren nach einem der vorhergehenden Ansprüche, worin, vor dem Speichern der erzeugten Teilmenge in einem Schnellzugriffspeicher in Schritt (iv), das Verfahren ferner umfasst: Identifizieren, ob der Schnellzugriffspeicher voll ist oder beschränkten verfügbaren Speicherplatz hat, und wenn ja, Entfernen von einem oder mehreren Einträgen unter Verwendung eines vorbestimmten Verwaltungsalgorithmus.

10. Verfahren nach Anspruch 9, worin der Verwaltungsalgorithmus einen oder mehrere Einträge entfernt, deren Verwendung am weitesten zurückliegt.

11. Verfahren nach Anspruch 9, worin Schritt (iv) ferner umfasst: Assoziieren eines Zusammenstellungszeit-Kostenaufwandes zum Erzeugen der Obermenge mit der erzeugten Obermenge; und worin der Verwaltungsalgorithmus einen oder eine vorbestimmte Anzahl von Einträgen mit dem niedrigsten Zusammenstellungszeit-Kostenaufwand entfernt.

12. Verfahren nach einem der vorhergehenden Ansprüche, ferner umfassend: Empfangen einer Anforderung eines Dokuments, das die in Schritt (i) angeforderten Glyphen enthält, und Zurücksenden des Dokuments mit der angeforderten Obermenge von Glyphen.

13. Verfahren nach einem der vorhergehenden Ansprüche, worin das Zurücksenden der Obermenge von Glyphen umfasst: Bündeln der Glyphen in einer einzigen Datei, z.B. einer SWF-Datei, und Senden der Datei an den Client-Standort.

14. Computerprogramm, Anweisungen umfassend, die, wenn sie durch eine Computervorrichtung ausgeführt werden, diese steuern, damit sie das Verfahren nach einem der Ansprüche 1 bis 13 durchführt.

15. Vorrichtung in einem Server (908), wobei die Vorrichtung mindestens einen Prozessor (910) und mindestens einen Speicher (920) mit darauf gespeichertem computerlesbarem Code aufweist, der, wenn er ausgeführt wird, den mindestens einen Prozessor (910) steuert, damit er das Verfahren nach einem der Ansprüche 1 bis 13 durchführt.

**Revendications**

1. Procédé, dans un serveur, pour mettre à disposition des fontes en réponse à une requête de client, le procédé comprenant :

   (i) la réception (301 ; 401 ; 501 ; 601) d'une requête demandant des glyphes, la requête identifiant une fonte et des caractères de la fonte qui sont demandés en requête ;
   (ii) la recherche (302 ; 401 ; 502 ; 603) d'au moins un super-jeu de glyphes, un super-jeu étant un sous-jeu de tous les glyphes pour une fonte qui contient plus que le sous-jeu exact de glyphes dans la requête ;
   (iii) si au moins un super-jeu est trouvé, le retour (304 ; 405 ; 508 ; 610) du ou d'un super-jeu sélectionné en réponse à la requête ; et
   (iv) si au moins un super-jeu n'est pas trouvé, la génération (304 ; 404 ; 507 ; 609) d'un jeu de glyphes qui contient les glyphes demandés en requête, le retour du jeu en réponse à la requête et le stockage du jeu généré à l'intérieur d'un cache.

2. Procédé tel que revendiqué selon la revendication 1, dans lequel l'étape (ii) est réalisée pendant une période temporelle prédéterminée ou sur un nombre prédéterminé d'itérations de recherche, après quoi l'étape (iv) est réalisée si aucun super-jeu n'est trouvé à l'intérieur de ladite période temporelle ou sur ledit nombre d'itérations.

3. Procédé tel que revendiqué selon la revendication 1 ou la revendication 2, dans lequel, si plusieurs super-jeux différents sont trouvés au niveau de l'étape (ii), le procédé comprend en outre l'assignation d'un coût respectif à chaque super-jeu et la sélection de l'un d'entre eux pour son retour au niveau de l'étape (iii) sur la base d'une règle prédéterminée.

4. Procédé tel que revendiqué selon la revendication 3, dans lequel le coût qui est assigné à chaque super-jeu dépend du nombre de caractères qui sont présents dans chaque super-jeu.

5. Procédé tel que revendiqué selon la revendication 4, dans lequel le super-jeu sélectionné au niveau de l'étape (iii) est celui qui comporte le moins de caractères.

6. Procédé tel que revendiqué selon l'une quelconque des revendications qui précèdent, dans lequel, avant l'étape (iii), le procédé comprend en outre les étapes constituées par :

   la génération, pour le ou chaque super-jeu qui est trouvé au niveau de l'étape (ii), d'un coût respectif ; et
   la génération d'un coût de compilation pour générer un super-jeu de glyphes qui contient les glyphes demandés en requête ;
   dans lequel:l'étape (iii) est réalisée seulement si un super-jeu qui est trouvé au niveau de l'étape (ii) présente un coût qui est déterminé au moyen d'une règle prédéterminée comme étant préférable au coût de compilation, sinon l'étape (iv) est réalisée.

7. Procédé tel que revendiqué selon la revendication 6, dans lequel le coût de compilation dépend du nombre de caractères dans la requête reçue au niveau de l'étape (i) et d'un coût prédéterminé pour générer un unique glyphe pour la fonte identifiée.

8. Procédé tel que revendiqué selon la revendication 7, dans lequel le coût de compilation dépend en outre d'une constante de coûts indirects qui est associée à la compilation d'un glyphe ou de glyphes pour la fonte identifiée.

9. Procédé tel que revendiqué selon l'une quelconque des revendications qui précèdent, dans lequel, avant le stockage du sous-jeu généré à l'intérieur d'un cache au niveau de l'étape (iv), le procédé comprend en outre l'identification de si oui ou non le cache est plein ou dispose d'un espace de stockage disponible restreint et s'il en est ainsi, la suppression d'une ou de plusieurs entrée(s) en utilisant un algorithme de gestion prédéterminé.

10. Procédé tel que revendiqué selon la revendication 9, dans lequel l'algorithme de gestion supprime une ou plusieurs entrée(s) utilisée(s) le moins récemment.

11. Procédé tel que revendiqué selon la revendication 9, dans lequel l'étape (iv) comprend en outre l'association, au super-jeu généré, d'un coût de temps de compilation pour générer ledit super-jeu et dans lequel l'algorithme de gestion supprime une entrée ou un nombre prédéterminé d'entrées qui présente(nt) le coût de temps de compilation minimum.

**12.** Procédé tel que revendiqué selon l'une quelconque des revendications qui précèdent, comprenant en outre la réception d'une requête demandant un document qui contient les glyphes qui sont demandés en requête au niveau de l'étape (i) et le retour du document avec le super-jeu de glyphes demandé en requête.

**13.** Procédé tel que revendiqué selon l'une quelconque des revendications qui précèdent, dans lequel le retour du super-jeu de glyphes comprend le regroupement des glyphes à l'intérieur d'un unique fichier, par exemple un fichier.swf, et l'envoi du fichier sur la localisation de client.

**14.** Programme informatique comprenant des instructions qui, lorsqu'elles sont exécutées par un appareil informatique, le commandent de manière à ce qu'il réalise le procédé selon l'une quelconque des revendications 1 à 13.

**15.** Appareil dans un serveur (908), l'appareil comportant au moins un processeur (910) et au moins une mémoire (920) à l'intérieur de laquelle un code pouvant être lu par un ordinateur est stocké, lequel code, lorsqu'il est exécuté, commande l'au moins un processeur (910) de manière à ce qu'il réalise un procédé tel que revendiqué selon l'une quelconque des revendications 1 à 13.

ABCDEFGHIJ
KLMNOPQRST
UVWXYZ1234
567890!@#$%
^&

10

BUY

12

FIG. 1(a)

12

BUY

14

GO

13

..B..U..Y..

15

..G..O..

18

..B..G..O..
..U..Y

FIG. 1(b)

20

22                        24                       26

```
REQUEST
{
    FontName,
    Set<Symbols>
}
```

Cache Lookup

```
*If "superset"
found, serve the
"superset".
*Otherwise, compute
the "superset",
cache it and return
it.
```

RESPONSE - Font Library

Client                        Server                        Font Cache

## FIG. 2

300

```
      ┌─────────┐
      │  Start  │
      └─────────┘
           │
           ▼
301 ┌──────────────────┐
    │  Receive Request │
    └──────────────────┘
           │
           ▼
302 ┌──────────────────┐
    │ Search for       │
    │ Superset(s)      │
    │ in Font Cache    │
    └──────────────────┘
           │
           ▼
303 ┌──────────────────┐
    │ Superset         │────┐
    │ identified?      │  Y │
    └──────────────────┘    │
           │ N              │
           ▼                │
304 ┌──────────────────┐    │
    │ Generate New     │    │
    │ Superset and     │    │
    │ store in Font    │    │
    │ Cache            │    │
    └──────────────────┘    │
           │                │
           ▼                │
305 ┌──────────────────┐◄───┘
    │ Transmit Superset│
    │ in Font File     │
    └──────────────────┘
           │
           ▼
      ┌─────────┐
      │   End   │
      └─────────┘
```

FIG. 3

400

```
      ┌─────────┐
      │  Start  │
      └─────────┘
           │
           ▼
401 ┌──────────────────┐
    │  Receive Request │
    └──────────────────┘
           │
           ▼
402 ┌──────────────────┐
    │ Search for       │
    │ Superset(s)      │
    │ in Font Cache    │
    └──────────────────┘
           │
           ▼
403 ┌──────────────────┐
    │ Superset         │────┐
    │ identified       │  Y │
    │ within Time <Tc? │    │
    └──────────────────┘    │
           │ N              │
           ▼                │
404 ┌──────────────────┐    │
    │ Generate New     │    │
    │ Superset and     │    │
    │ store in Font    │    │
    │ Cache            │    │
    └──────────────────┘    │
           │                │
           ▼                │
405 ┌──────────────────┐◄───┘
    │ Transmit Superset│
    │ in Font File     │
    └──────────────────┘
           │
           ▼
      ┌─────────┐
      │   End   │
      └─────────┘
```

FIG. 4

500

```
           ┌──────────┐
           │  Start   │
           └────┬─────┘
                │
                ▼
501   ┌──────────────────┐
      │  Receive Request │
      └────────┬─────────┘
               │
               ▼
502   ┌──────────────────┐              504   ┌──────────────────┐
      │ Search for Superset(s)│              │   >1 Superset?   │
      │   in Font Cache  │                    └────────┬─────────┘
      └────────┬─────────┘                             │ Y
               │                         Y              ▼
503   ┌──────────────────┐          505   ┌──────────────────┐
      │ Superset identified │──────────▶  │ Generate Cost for │
      │  (within Time<Tc) │               │   each Superset   │
      └────────┬─────────┘               └────────┬─────────┘
               │ N                                 │
               ▼                         506   ┌──────────────────┐
507   ┌──────────────────┐                    │  Select Superset  │
      │   Generate New   │                    │ using Cost Function│
      │ Superset and store in│               └────────┬─────────┘
      │    Font Cache    │                             │ N
      └────────┬─────────┘                             │
               │                                       │
               ▼                                       │
508   ┌──────────────────┐                             │
      │ Transmit Superset in│◀──────────────────────────┘
      │    Font File     │
      └────────┬─────────┘
               │
               ▼
           ┌──────────┐
           │   End    │
           └──────────┘
```

FIG. 5

600

FIG. 6

601 Receive Request

602 Calculate Compilation Cost for New Superset

603 Search for Superset(s) in Font Cache

604 Superset identified (within Time<Tc)

605 >1 Superset?

606 Generate Cost for each Superset

607 Select Superset using Cost Function

608 Cost for Superset > Compilation Cost for New Superset?

609 Generate New Superset and store in Font Cache

610 Transmit Superset in Font File

**Headline:**

Headline

Max 8 characters recommended

**Headline font:**

Felt Tip Roman Bold ▲▼

**Headline text color:**

■ #000000

Click on square to select color or type in numerical value.

*}106A*

**Description line 1:**

Description line 1

Max 18 characters recommended

**Description line 1 font:**

Garrison Sans ▲▼

**Description Line 1 text color:**

■ #000000

Click on square to select color or type in numerical value.

*}106B*

**Description line 2:**

Description line 2

Editable Fonts

---

*100*

**Ad Preview (300x250)** ⑦

This is a fully interactive sample of your new ad.
Click **Update Preview** to apply any changes.

Select preview size:
336x280 728x90 160x600 120x600 300x250

*⌐102*

# Headline ⌐*104A*

Description line 1 ⌐*104B*

*Description line 2* ⌐*104C*

**Description line 3**

Enter Site

LOGO

www.yoururlgoeshere.com                Ads by **Google**

Update Preview | Update to see new changes.

☐ don't follow me

---

## FIG. 7

FIG. 8(a)

Superset
Request *223*

700

| Compilation Cost Module *234* | Selection Module *236* |
| Cache Search Module *235* | Superset Analysis Module *237* |
| Cache Management Module *238* | |

Superset Module *213*

Font, Symbols

Cache
Management *232*

Cached Font
Information *230*

FIG. 8(b)

Flash Support Server

Static FontDb *704*    *702*

Font Availability    Packaged Font

FE
*714*

Packaged Font

SCS
*724*

FIG. 9

800

| Font | Advanced Antialising? | Characters | Median Compile Time (ms) | Swf Size (Bytes) |
|------|----------------------|------------|--------------------------|------------------|
| Arial | No | all | 984 | 89660 |
| Arial | No | "ABC" | 594 | 1553 |
| Arial | No | "Visit the Complete Adobe Font Page & Shop Now for Over 2,300 Fonts." | 659 | 4864 |
| Arial Unicode | No | ABC | 1056 | 1560 |
| Arial Unicode | No | "価格.comでゲームの価格を徹底比較 役立つユーザーレビューも満載 !" | 1079 | 5650 |

(802) (804) (806) (808) (810)

FIG. 10

900

300, 400, 500, 600

```
        ┌─────────┐                              ┌─────────┐
        │  Start  │                              │  Start  │
        └────┬────┘                              └────┬────┘
             │                                        │
             ▼                                        ▼
901  ┌──────────────────┐              ┌──────────────────────┐
     │Determine Each Glyph│     Request │   Receive Request    │
     └────────┬─────────┘  ┌ ─ ─ ─ ─ ─▶└──────────┬───────────┘
             │            │                        │
             ▼            │                        ▼
902  ┌──────────────────┐ │              ┌──────────────────────┐
     │ Generate Request │─┘              │                      │
     └────────┬─────────┘                │                      │
             │                           │                      │
             ▼                           │  Intermediate Steps  │
903  ┌──────────────────┐                │                      │
     │ Receive Information│◀ ─ ─ ─ ─ ┐   │                      │
     └────────┬─────────┘          │    │                      │
             │                     │    └──────────┬───────────┘
             ▼                     │               │
904  ┌──────────────────┐          │               ▼
     │Generate Presentation│        │    ┌──────────────────────┐
     └────────┬─────────┘          │    │ Transmit Superset in │
             │                     └ ─ ─│      Font File       │
             ▼                 Response  └──────────┬───────────┘
        ┌─────────┐                                 │
        │   End   │                                 ▼
        └─────────┘                            ┌─────────┐
                                               │   End   │
                                               └─────────┘
```

FIG. 11

EP 2 763 051 B1

908

Processor
910

Memory    920

950

Storage Device

930

Input/Output

Input/Output Devices

940

FIG. 12

24

**EP 2 763 051 B1**

## REFERENCES CITED IN THE DESCRIPTION

### Patent documents cited in the description

• EP 2312458 A